(19) Europäisches Patentamt / European Patent Office / Office européen des brevets

(11) **EP 3 115 927 A1**

(12) **EUROPEAN PATENT APPLICATION**

(43) Date of publication:
**11.01.2017 Bulletin 2017/02**

(51) Int Cl.:
***G06K 9/00*** *(2006.01)*

(21) Application number: **15306130.4**

(22) Date of filing: **09.07.2015**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**MA**<br><br>(71) Applicant: **Thomson Licensing**<br>**92130 Issy-les-Moulineaux (FR)** | (72) Inventors:<br>• **CAI, Kangying**<br>  **35576 Cesson-Sévigné (FR)**<br>• **LUO, Tao**<br>  **35576 Cesson-Sévigné (FR)**<br><br>(74) Representative: **Huchet, Anne et al**<br>**TECHNICOLOR**<br>**1-5, rue Jeanne d'Arc**<br>**92130 Issy-les-Moulineaux (FR)** |

(54) **METHOD AND APPARATUS FOR PROCESSING A SCENE**

(57) The present embodiments are directed to 3D scene understanding and modeling, wherein an input RGBD indoor scene is used as query to retrieve the most similar scene models from a 3D scene model database. In particular, contextual models of the input scene and contextual models of the 3D scene model database are used to determine the matching scene models, in addition to the geometrical information of the input scene and the 3D scene model database. The matching scene models are determined based on a contextual matching score and a geometrical matching score. When a contextual group/pair occurs more frequently in the 3D scene model database, the geometrical information is given more weight to determine the matching scene models.

FIG. 2

EP 3 115 927 A1

**Description**

TECHNICAL FIELD

This invention relates to a method and an apparatus for 3D scene understanding and modeling, and more particularly, to a method and an apparatus for efficient query of 3D scene databases with RGBD data for 3D scene understanding and modeling.

BACKGROUND

In general, the objective of indoor scene understanding and modeling is to use an indoor scene as query to retrieve the most similar scene represented by 3D models from a 3D model scene database. A scene refers to a group of objects, together with their relative position and the relationship between them. Indoor scene understanding and modeling can be used, for example, but not limited to, in virtual reality applications, computer games, special effects for movies, post production, and inverse engineering.

A 3D indoor scene can be acquired using consumer-level RGBD cameras, such as Microsoft Kinect, Primesense sensors, and mobile devices equipped with on-set depth sensors, such as Google Tango. Here, RGBD data refers to data including both color information and depth information for each pixel, and a RGBD object refers to as an object represented by RGBD data. The color information in the RGBD data usually represents a scene from one viewpoint.

In the 3D scene database, a 3D model represents a 3D object in 3D space, and it enables continuous viewpoint representations of an object. A 3D model may be point based, mesh based or volume based.

Indoor scene understanding and modeling is particularly challenging. An indoor scene is usually cluttered and significant portions of the indoor objects may remain occluded in all views, which leads to a partial representation of the scene. Because not all data of the RGBD scene is available, the objects and scene layout may not be properly recognized. Also, because the geometry of indoor objects is usually complex, the recognition of the objects and the scene also becomes more difficult. In addition, the indoor scenes captured by consumer-level cameras usually are in low resolutions and have noise in the input RGBD data. Overall, the low quality of the query data may cause ambiguity in the retrieval and the retrieved result might be wrong.

SUMMARY

According to an aspect of the present principles, a method for processing a first scene is presented, comprising: accessing a 3D scene model database and contextual models of the 3D scene model database; accessing a contextual model of the first scene; querying the 3D scene model database using the contextual models of the 3D scene model database and the contextual model of the first scene; an determining a plurality of 3D scene models associated with the first scene in response to the querying. The present embodiments also provide an apparatus for performing these steps.

According to another aspect of the present principles, a method for processing a first scene is presented, comprising: accessing a 3D scene model database and contextual models of the 3D scene model database; accessing a contextual model of the first scene; querying the 3D scene model database using the contextual models of the 3D scene model database and the contextual model of the first scene; an determining a plurality of 3D scene models associated with the first scene responsive to a frequency of a contextual pair or a contextual group in the 3D scene model database, wherein the determining is based on a weighted sum of a contextual matching score and a geometrical matching score, and wherein a weight of geometrical matching score increases if the frequency of a contextual pair or a contextual group increases; and forming a 3D scene corresponding to the first scene responsive to the plurality of 3D scene models from the 3D scene model database. The present embodiments also provide an apparatus for performing these steps.

The present embodiments also provide a computer readable storage medium having stored thereon instructions for processing a first scene according to the methods described above.

BRIEF DESCRIPTION OF THE DRAWINGS

FIG. 1 illustrates the workflow of an exemplary indoor scene understanding and modeling system.

FIG. 2 illustrates the workflow of an exemplary 3D indoor scene modeling system according to an embodiment of the present principles.

FIG. 3 illustrates an exemplary method for performing query of 3D indoor scene database according to an embodiment of the present principles.

FIG. 4 illustrates a block diagram of an exemplary system in which various aspects of the exemplary embodiments of the present principles may be implemented.

DETAILED DESCRIPTION

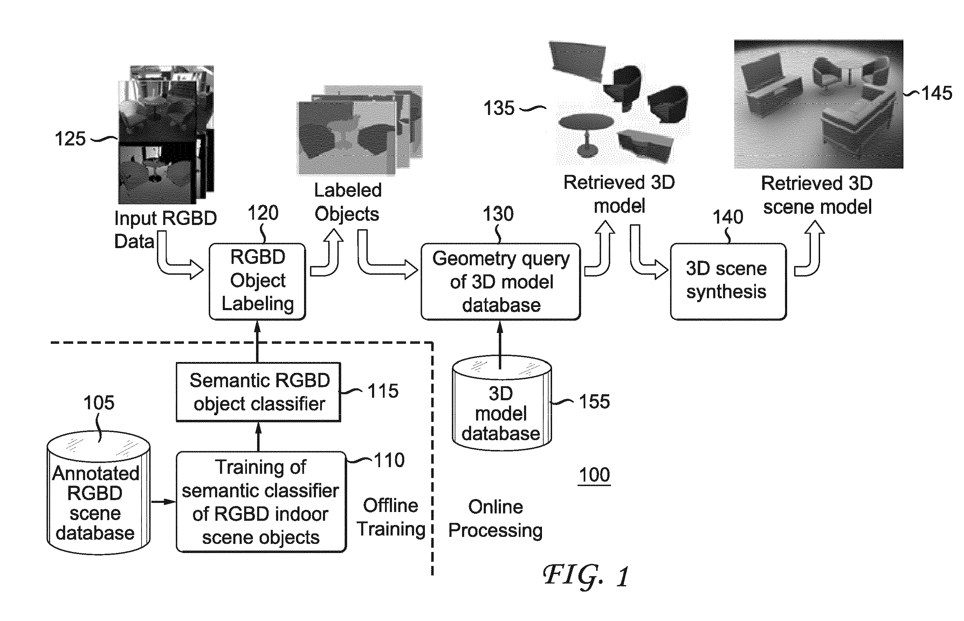

There are existing works on how to use RGBD databases and 3D model databases to understand and model indoor scenes represented by RGBD data from consumer-level RGBD cameras. Many 3D indoor scene models are available, such as those from Google SketchUp. FIG. 1 illustrates the workflow of an exemplary indoor scene understanding and modeling system 100.

As shown in FIG. 1, using an annotated RGBD scene database (105), a classifier (115) that could label a RGBD object depending on its features can be trained offline (110). A scene (125) represented by RGBD data can be segmented into objects, which can be labeled (120) based on the trained classifier (115). A RGBD object from the scene can then be used as query to retrieve (130) a matching 3D model (135) from the 3D model database (155) based on the geometrical similarity. Using the retrieved 3D models and the relative position/relationship among objects calculated from the input RGBD scene, a scene (145) represented by 3D models can then be synthesized (140).

Existing works usually only rely on the geometry similarity between objects in the input RGBD scene and 3D models in the 3D model database to retrieve 3D models. For example, an article by Tianjia Shao et. al., entitled "An Interactive Approach to Semantic Modeling of Indoor Scenes with a RGBD Camera," in ACM Transactions on Graphics (TOG), Siggraph Asia 2012, proposes an interactive approach of semantic modeling of indoor scenes with a consumer-level RGBD camera. A user first takes a RGBD image of an indoor scene, which is automatically segmented into a set of regions with semantic labels using the conditional random field (CRF) model trained from a RGBD scene database. Contextual information is used to eliminate the ambiguities during semantic labeling. After the segmentation is completed, the depth data of each semantic region is used to retrieve a matching 3D model from a database. Each retrieved model is then transformed according to the image depth to yield the scene.

Here the semantic model is a conceptual data model that includes the capability to express information that enables parties to exchange information to interpret meaning (semantics) from the instances, without the need to know the meta-model. Such semantic models are fact oriented (as opposed to object oriented). Facts could be expressed by the meaning of single data element and/or relations between/among data elements, whereas higher order relations are expressed as collections of binary relations. Typically binary relations have the form of triples: Object-RelationType-Object.

An article by Liangliang Nan et. al., entitled "A Search-Classify Approach for Cluttered Indoor Scene Understanding," in ACM Transactions on Graphics (TOG), Siggraph Asia 2012, presents an algorithm for recognition and reconstruction of scanned 3D indoor scenes. The algorithm first learns a classifier from a set of labeled scanned data. The recognition and reconstruction step is initialized by over-segmentation. The growing of patches is verified using classifiers at each searching step. The final segmentation result is associated with a corresponding category. Then corresponding template models are transformed to construct the final 3D model. The modeling results are usually limited by the number of pre-computed classifiers.

An article by Young Min Kim et. al., entitled "Acquiring 3D Indoor Environments with Variability and Repetition," in ACM Transactions on Graphics (TOG), Siggraph Asia 2012, discloses performing 3D indoor environment acquisition in two phases: (i) a learning phase wherein it acquires 3D models of frequently occurring objects and capture their variability modes from only a few scans, and (ii) a recognition phase wherein from a single scan of a new area, it identifies previously seen objects but in different poses and locations. Instead of using 3D model database, it builds a proxy model of the specified environment during the learning phase. The learned models are limited for the specified environment.

As discussed before, when only the geometry similarity is used, the quality of the retrieved 3D scene is affected by the ambiguities caused by the low resolution and partial representation of the input RGBD data and noise in the input RGBD data. To improve the retrieval, an article by Kun Xu et. al., entitled "Sketch2Scene: Sketch-based Co-retrieval and Co-placement of 3D Models," in ACM Transactions on Graphics 32(4), 123:1-123:12, 2013 (Proceedings of SIGGRAPH 2013), hereinafter "Xu2013," proposes a system which turns a pre-segmented freehand sketch drawing to semantically valid and well-arranged scenes of 3D models by making use of a large collection of 3D scenes. The functional and spatial relationships among models in the 3D scene database are summarized into structural groups, which are groups of object categories which always appear together and have reliable relationships or patterns. Structural groups are used to resolve the ambiguity problem during 3D scene database retrieval, which uses single sketch objects as queries and 3D model placement for 3D scene model synthesis. This work requires pre-segmentation of the input scene image, and may incur a high complexity because the query is based on selecting the best combination from a considerable amount of 3D model.

The present principles are directed to a method and apparatus for improving 3D indoor scene understanding and modeling while still maintaining low computational complexity. In one embodiment, using the input RGBD scene data, for example, captured by consumer-level RGBD cameras, as query, we propose a solution to accurately retrieve 3D indoor scene models from a 3D indoor scene model database by using both contextual models trained from a RGBD database and the 3D indoor scene model database. The term "contextual model" refers to the label of each object, the contextual relationship among various labeled objects and the label of the whole scene. Here we define "contextual model" as a special type of "semantic model". In particular, contextual model should include the relations between/among data elements while semantic model doesn't necessarily include this kind of information.

In Xu2013, contextual relationship trained from the RGBD scene database is used to label objects in the input RGBD scene data, but are not used to query the 3D model database. Different from the existing works, our solution uses contextual models trained from the RGBD database and contextual models trained from the 3D indoor scene model database to retrieve 3D indoor scene models. Specifically, both RGBD objects and the contextual relationship among these RGBD objects are used to query the 3D indoor scene model database. Advantageously, our solution may efficiently reduce the ambiguities in the retrieval process without introducing much computational complexity.

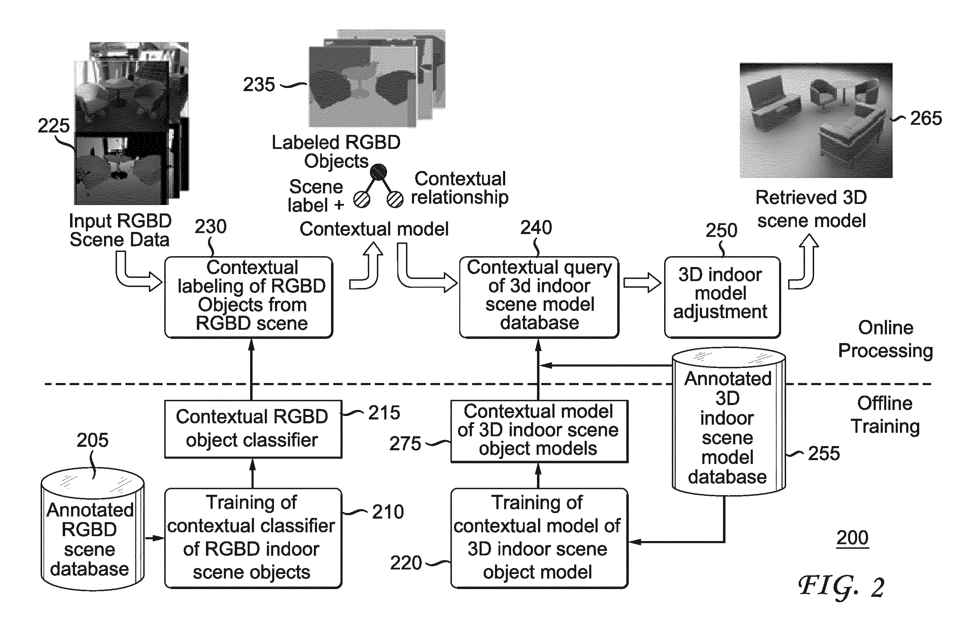

FIG. 2 illustrates the workflow of an exemplary 3D indoor scene modeling system according to an embodiment of the present principles. Two annotated databases: an annotated RGBD indoor scene database (205) and an annotated 3D indoor scene model database (255) (instead of a 3D model database often used in existing works) are used, wherein these two databases contain contextual models that are obtained using the same method. In both databases, each scene has its own scene label (for example, but not limited to, meeting room, living room, and bedroom), and each object in the scene has its own object label (for example, but not limited to, chair, computer, and cellphone).

Similar to the workflow as shown in FIG. 1, the 3D modeling according to FIG. 2 can be implemented by both offline and online processes. In one embodiment, the offline processes include:

- Training (210) a contextual classifier from the annotated RGBD scene database (205). The contextual classifier (215) can be used to determine the contextual model of the input RGBD scene; and
- Training (220) the contextual model of each 3D scene model in the 3D scene database. In one embodiment, we may use the method described in [Xu2013]. In addition, we may add the scene category to the semantic group.

Online processes include:

- Segmenting (230) the input RGBD scene (225) into objects and calculating the contextual model (235) of the input RGBD scene.
- Retrieving (240) the most similar 3D scene models from the 3D scene database (225) using both contextual and geometric information. This represents a significant difference from existing works. Here, we retrieve 3D scene models which may include groups of objects to correspond to groups of objects in the input scene, while the existing works generally retrieve only one matching 3D object model from the 3D model database for an object in the input RGBD scene.
- Adjusting (250) the retrieved 3D scene models (265) according to the layout of the input RGBD scene to synthesize a scene using 3D models. We may use the depth information of the labelled RGBD objects to adjust the layout of the retrieved 3D indoor scene.

According to the present principles, the contextual model could consist of one or both of the following:

- Contextual pairing between a pair of object category (also referred to as object category pair) in the context of some scene categories, for example, tables and books can form a pair because of a supporting relationship between them. Other relationships that can be used to form contextual pairs include, but not limited to spatial, temporal, coplanar, symmetric and repeating. Here, an object category refers to a category of objects. For example, objects labelled as "small chair," "high chair" and "computer chair" can be considered as belonging to one object category labelled as "chair."

- Contextual grouping in the context of some scene category, which groups object categories, with or without contextual pairing, that often appear nearby in the context of some scene categories. For example, a monitor, a keyboard and a mouse often appear together and can be regarded as a contextual group. When there are only two objects in the contextual group, the contextual group is equivalent to a contextual pair. Generally, contextual grouping is more complicated than contextual pairing.

The difference between the contextual group as defined here and the structural group of Xu2013 is that the contextual group takes into account the relationship between the object category groups and the scene categories while the structural group of Xu2013 doesn't.

In the following, the training module for RGBD indoor scene objects (210), the labeling module for the RGBD input scene (230), contextual query of the 3D indoor scene database (240) of system 200 are described in further detail.

Train the contextual classifier from the RGBD indoor scene database (210)

From the annotated RGBD scene database, a contextual identifier can be trained. In one embodiment, we may first discover the pairwise relationships among all possible object category pairs, then discover the contextual groups, comparing both the object categories and the pairwise relationship between object category pairs. Alternatively, we may first discover the contextual groups, then discover the pairwise relationship among the object category pairs in one contextual group.

The contextual groups can be discovered using the method described in Xu2013, i.e., finding the most common appeared object category groups among all scenes. The pairwise object category relationships can also be discovered using the method described in Xu2013.

Also, CRF models as described in an article by Dahua Lin et al., entitled "Holistic Scene Understanding for 3D Object Detection with RGBD cameras," in International Conference on Computer Vision (ICCV), Sydney, Australia, December 2013, can be used to train the classifier.

Input RGBD scene labeling (230)

The input RGBD scene image is first over-segmented or subdivided into super-pixels. Then, using the trained contextual model, the objects in the input RGBD scene are segmented and labeled. This outputs labeled objects, the contextual relationship between objects, objects and the scene.

For example, as shown in 235, the objects in an input scene may be labelled as "Armchair" and "Coffee table," the scene may be labelled as "Living room," and the contextual relationship may be represented as "Adjacent."

Query of the 3D indoor scene database (240)

According to the present embodiments, we may retrieve the most similar 3D scene model from the 3D scene database using both contextual models and geometric information.

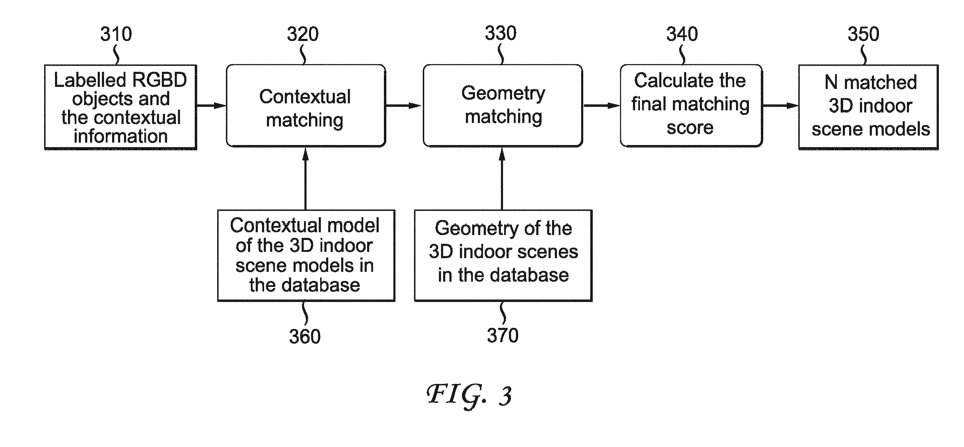

FIG. 3 illustrates an exemplary method 300 for performing query of 3D indoor scene model database, which can be used in module 240 of system 200. It should be noted that the whole input scene is used as query and the query result is some 3D model scenes.

Based on the labelled RGBD objects and contextual relationship in the input indoor scene (310) and contextual models of the 3D indoor scene models in the 3D scene database (360), we can calculate a contextual matching score, based on the contextual similarity, between the input RGBD scene and the 3D scene models in the database (320). The contextual matching score can be calculated by graph matching techniques or text based techniques.

The contextual matching module (320) may output the top $\alpha*N$ matched 3D indoor scene models in the database, where N is the number of the final retrieved 3D indoor scenes and $\alpha$ is some predefined constant. For example, N = 20 and $\alpha$ = 3. For every retrieved 3D indoor scene model, the correspondence between 3D model contextual pairs/groups and RGBD object contextual pairs/groups, retrieved 3D scene models and RGBD objects are calculated and stored.

Then we may calculate the geometrical similarity between input RGBD scene objects and the corresponding 3D scene models in the database (330). Specifically, we may calculate the geometrical matching score of each 3D model output from contextual matching module 320. Each 3D model is compared with its corresponding RGBD object. In one embodiment, each 3D model in the scene model database is pre-rendered under certain numbers of viewpoints. The color information of the RGBD objects is compared with the rendered images of 3D models in the 3D indoor scene model database (370). The geometrical matching score can be calculated, for example, using random regression forest as described in an article by FANELLI, G. et al., entitled "Real time head pose estimation from consumer depth cameras," in Proceedings of the 33rd international conference on Pattern recognition, Springer-Verlag, Berlin, Heidelberg, DAGM'11, 101-110. The geometrical matching score of an RGBD object and one rendered image of a 3D model can be determined based on:

- the difference between the color information of the RGBD object and one rendered image of the 3D model ($Dis(RGBD, img)$) from a single view.

- the difference between the labels of the RGBD object and the rendered image of the 3D model ($r_{label}$). In one example, $r_{label}$ can be calculated as

$$r_{label} = \begin{cases} 0, \text{if label of RGBD object} = \text{label of 3D model} \\ 1, \hspace{4cm} \text{otherwise} \end{cases}$$

- the difference between the labels of the input scene category and the scene category to which the 3D model belongs ($r_{scene}$). In one example, $r_{scene}$ can be calculated as

$$r_{scene} = \begin{cases} 1, \text{if label of input RGBD scene} \neq \text{label of any scene that the 3D model belongs to} \\ 0, \hspace{6cm} \text{otherwise} \end{cases}$$

In one embodiment, the geometrical matching score can be calculated as follows:

$$R(RGBD, img) = \exp(-\lambda(\alpha \cdot Dis(RGBD, img) + \beta \cdot r_{label} + \gamma \cdot r_{scene})) \hspace{1cm} (1)$$

where $\lambda$, $\alpha$, $\beta$ and $\gamma$ are predefined coefficients (for example, $\lambda = 15$, $\alpha$=0.35, $\beta$=0.35 and $\gamma = 0.3$).

Geometrical matching scores for different viewpoints can be calculated. Then from the matching scores for the single views ($R(RGBD, img)$), the total matching score $m_G$ could be obtained, for example, as the (weighted) average of the single viewpoint matching scores.

Based on the contextual matching score and the geometrical matching score, a final matching score to measure the similarity between the input RGBD scene and the 3D scene models in the database can be calculated (340). We observe that when a contextual group/pair occur more often in the 3D indoor scene model database, it may be because the contextual group/pair corresponds to more possible combinations of object categories. For example, in a 3D indoor scene model database, a contextual pair including a desk and a chair may occur frequently, and it may be desirable to further differentiate between a combination of a computer desk and chair and another combination of a dining table and chair based on other information, such as geometrical information. Thus, we consider that the more frequently the current contextual group/pair appears in the 3D indoor scene model database, the more impact the geometric similarity has on the final matching score.

In one embodiment, for each contextual pair or contextual group of the current 3D indoor scene model, suppose its contextual matching score and geometrical matching are $m_S$ and $m_G$, respectively, its final matching score $m_{Context}$ can be calculated as:

$$m_{Context} = C \cdot m_S + (1.0 - C) \cdot m_G, \; C = \exp(-\theta \cdot \frac{n}{M}) \hspace{1cm} (2)$$

where C is a coefficient, n is the number of times the current contextual pair/group appears in the 3D indoor scene model database, M is the number of the scene models in the database and $\theta$ is a predefined coefficient, for example , $\theta = 10$.

After the matching score for each contextual pair/group is calculated, the matching score for a 3D indoor scene model can be calculated based on the matching scores for the contextual pairs/groups included in the 3D indoor scene model. For the matching score of the current 3D indoor scene model, one embodiment here is to use the average of the matching scores of all the contextual groups and pairs in the current 3D indoor scene model. Alternatively, we can use the product of all the matching scores.

The 3D scene models in the 3D scene database with the highest matching scores are retrieved to synthesize a new 3D scene. Subsequently, the N retrieved 3D indoor scene models (350) can be used to form the new 3D scene. For example, for each part of the input RGBD scene, a corresponding part is obtained from one of the N retried models based on the similarity. The new scene may also correspond to just one of the N retrieved 3D indoor scene models if there is a retrieved 3D indoor scene model sufficiently close to the input RGBD scene.

By comparing the contextual models of the input RGBD indoor scene data and the contextual models derived from the 3D indoor scene model database, the present principles may efficiently eliminate the ambiguities during 3D indoor scene query with low quality RGBD data. Compared with Xu2013, which also does semantic query of 3D indoor scene database, the proposed method has lower computational complexity as it does not need to calculate the combination score for N * Number_of_3D_Object 3D model combinations. In addition, our proposed method is more likely to retrieve the contextual relationship appearing less frequently in the 3D indoor scene model database, while Xu2013 usually retrieves the 3D model combinations appearing more frequently in the database.

In the above, different embodiments are discussed assuming the RGBD data is used for the input scene data.

It should be noted that the present principles can also be applied when other types of image data or other semantic models are used to represent the input scene data. The present principles can also be used to tag RGBD objects in the scene data obtained by consumer-level RGBD cameras. In the above, we mainly discuss 3D indoor scene understanding and modeling. It should also be noted that the present principles can be applied when the captured RGBD scene is not an indoor scene.

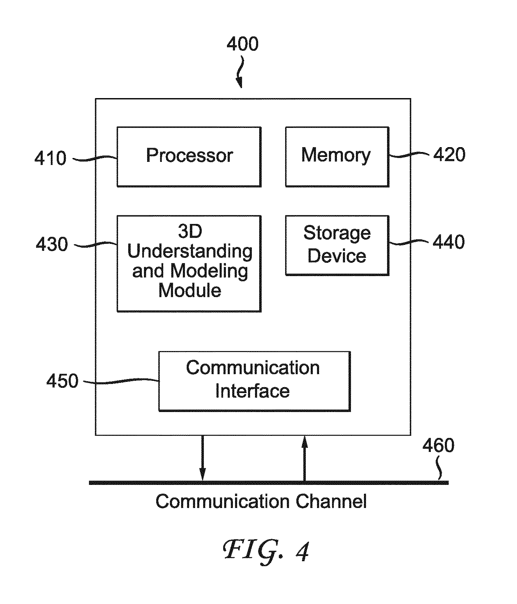

FIG. 4 illustrates a block diagram of an exemplary system in which various aspects of the exemplary embodiments of the present principles may be implemented. System 400 may be embodied as a device including the various components described below and is configured to perform the processes described above. Examples of such devices, include, but are not limited to, personal computers, laptop computers, smartphones, tablet computers, digital multimedia set top boxes, digital television receivers, personal video recording systems, connected home appliances, and servers. System 400 may be communicatively coupled to other similar systems, and to a display via a communication channel as shown in FIG. 4 and as known by those skilled in the art to implement the exemplary video system described above.

The system 400 may include at least one processor 410 configured to execute instructions loaded therein for implementing the various processes as discussed above. Processor 410 may include embedded memory, input output interface and various other circuitries as known in the art. The system 400 may also include at least one memory 420 (e.g., a volatile memory device, a non-volatile memory device). System 1300 may additionally include a storage device 440, which may include non-volatile memory, including, but not limited to, EEPROM, ROM, PROM, RAM, DRAM, SRAM, flash, magnetic disk drive, and/or optical disk drive. The storage device 440 may comprise an internal storage device, an attached storage device and/or a network accessible storage device, as non-limiting examples. System 400 may also include an 3D understanding and modeling module 1330 configured to process data to synthesize a 3D scene.

3D understanding and modeling module 430 represents the module(s) that may be included in a device to perform the 3D understanding and modeling functions. Additionally, 3D understanding and modeling module 430 may be implemented as a separate element of system 400 or may be incorporated within processors 410 as a combination of hardware and software as known to those skilled in the art.

Program code to be loaded onto processors 410 to perform the various processes described hereinabove may be stored in storage device 440 and subsequently loaded onto memory 420 for execution by processors 410. In accordance with the exemplary embodiments of the present principles, one or more of the processor(s) 410, memory 420, storage device 440 and 3D understanding and modeling module 430 may store one or more of the various items during the performance of the processes discussed herein above, including, but not limited to the annotated RGBD scene database, the annotated 3D indoor scene model database, equations, formula, matrices, variables, operations, and operational logic.

The system 400 may also include communication interface 450 that enables communication with other devices via communication channel 460. The communication interface 450 may include, but is not limited to a transceiver configured to transmit and receive data from communication channel 460. The communication interface may include, but is not limited to, a modem or network card and the communication channel may be implemented within a wired and/or wireless medium. The various components of system 400 may be connected or communicatively coupled together using various suitable connections, including, but not limited to internal buses, wires, and printed circuit boards.

The exemplary embodiments according to the present principles may be carried out by computer software implemented by the processor 410 or by hardware, or by a combination of hardware and software. As a non-limiting example, the exemplary embodiments according to the present principles may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory and removable memory, as non-limiting examples. The processor 410 may be of any type appropriate to the technical environment, and may encompass one or more of microprocessors, general purpose computers, special purpose computers and processors based on a multi-core architecture, as non-limiting examples.

The implementations described herein may be implemented in, for example, a method or a process, an apparatus, a software program, a data stream, or a signal. Even if only discussed in the context of a single form of implementation (for example, discussed only as a method), the implementation of features discussed may also be implemented in other forms (for example, an apparatus or program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation" of the present principles, as well as other variations thereof, mean that a particular feature, structure, characteristic, and so forth described in connection with the embodiment is included in at least one embodiment of the present principles.

Thus, the appearances of the phrase "in one embodiment" or "in an embodiment" or "in one implementation" or "in an implementation", as well any other variations, appearing in various places throughout the specification are not necessarily all referring to the same embodiment.

Additionally, this application or its claims may refer to "determining" various pieces of information. Determining the information may include one or more of, for example, estimating the information, calculating the information, predicting the information, or retrieving the information from memory.

Further, this application or its claims may refer to "accessing" various pieces of information. Accessing the information may include one or more of, for example, receiving the information, retrieving the information (for example, from memory), storing the information, processing the information, transmitting the information, moving the information, copying the information, erasing the information, calculating the information, determining the information, predicting the information, or estimating the information.

Additionally, this application or its claims may refer to "receiving" various pieces of information. Receiving is, as with "accessing", intended to be a broad term. Receiving the information may include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

**Claims**

1.  A method of processing a first scene, comprising:

    accessing (360) a 3D scene model database and contextual models of the 3D scene model database;
    accessing (310) a contextual model of the first scene;
    querying (320, 330) the 3D scene model database using the contextual models of the 3D scene model database and the contextual model of the first scene; and
    determining (340) a plurality of 3D scene models associated with the first scene in response to the querying.

2.  The method of claim 1, further comprising:

    forming a 3D scene corresponding to the first scene responsive to the plurality of 3D scene models from the 3D scene model database.

3.  The method of claim 1, wherein the first scene is represented by RGBD data.

4.  The method of claim 1, wherein the contextual model of the first scene is determined by using a classifier trained from a RGBD scene database.

5.  The method of claim 1, wherein the contextual models of the 3D scene model database and contextual model of the first scene are generated based on a same method.

6.  The method of claim 1, wherein the contextual models of the 3D scene model database and first scene includes relationship between object category groups.

7.  The method of claim 6, wherein an object in the 3D scene model database or in the RGBD scene database is classified as corresponding to an object category.

8.  The method of claim 7, wherein the querying further comprises:

determining a matching 3D scene model in the 3D scene model database for the first scene.

9. The method of claim 8, wherein the matching 3D scene model is determined using graph matching responsive to the contextual models of the 3D scene model database and the contextual model of the first scene.

10. The method of claim 9, wherein the matching 3D scene model is further determined using geometrical matching between the 3D scene model and the first scene.

11. The method of claim 1, wherein the determining is further responsive to a frequency of a contextual pair or a contextual group in the 3D scene model database.

12. The method of claim 11, wherein the determining is based on a weighted sum of a contextual matching score and a geometrical matching score, and wherein a weight of geometrical matching score increases if the frequency of a contextual pair or a contextual group increases.

13. An apparatus for processing a first scene, comprising a processor configured to perform the method according to any of claims 1-12.

14. A non-transitory computer readable storage medium having stored thereon instructions for processing a first scene, according to any of claims 1-12.

FIG. 1

100

FIG. 2

*FIG. 3*

400

410 — Processor

Memory — 420

430 — 3D Understanding and Modeling Module

Storage Device — 440

450 — Communication Interface

460

Communication Channel

*FIG. 4*

Europäisches
Patentamt

European
Patent Office

Office européen
des brevets

# EUROPEAN SEARCH REPORT

**Application Number**

EP 15 30 6130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KANG CHEN ET AL: "Automatic semantic modeling of indoor scenes from low-quality RGB-D data using contextual information", ACM TRANSACTIONS ON GRAPHICS (TOG), ACM, US, vol. 33, no. 6, 19 November 2014 (2014-11-19), pages 1-12, XP058060822, ISSN: 0730-0301, DOI: 10.1145/2661229.2661239 * sections 1-7 * * abstract; figures 1-18 * | 1-14 | INV. G06K9/00 |
| X | ZICHENG LIU ET AL: "Model-driven indoor scenes modeling from a single image", 20150603; 20150603 - 20150605, 3 June 2015 (2015-06-03), pages 25-32, XP058069783, ISSN: 0713-5424 ISBN: 978-1-4822-6003-8 | 1-10,13, 14 | |
| A | * sections 1-6 * * abstract; figures 1-15 * | 11,12 | TECHNICAL FIELDS SEARCHED (IPC) |
| X | Peter Henry ET AL: "RGB-D Mapping: Using Depth Cameras for Dense 3D Modeling of Indoor Environments" In: "Field and Service Robotics", 1 January 2014 (2014-01-01), Springer Berlin Heidelberg, Berlin, Heidelberg, XP055192425, ISSN: 1610-7438 ISBN: 978-3-54-075404-6 vol. 79, pages 477-491, DOI: 10.1007/978-3-642-28572-1_33, | 3,4 | G06K G06F |
| A | * sections 1, 3-5 * * abstract; figures 1-6 * | 1,2,5-14 | |

-/--

The present search report has been drawn up for all claims

| Place of search | Date of completion of the search | Examiner |
|---|---|---|
| The Hague | 16 December 2015 | Nilsson, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 15 30 6130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KUN XU ET AL: "Sketch2Scene", ACM TRANSACTIONS ON GRAPHICS (TOG), vol. 32, no. 4, 1 July 2013 (2013-07-01), page 1, XP055236263, US ISSN: 0730-0301, DOI: 10.1145/2461912.2461968 | 1-10,13, 14 | |
| A | * sections 1-7 * * abstract; figures 1-12 * ----- | 11,12 | |

TECHNICAL FIELDS
SEARCHED      (IPC)

The present search report has been drawn up for all claims

| Place of search | Date of completion of the search | Examiner |
|---|---|---|
| The Hague | 16 December 2015 | Nilsson, Martin |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KUN XU.** Sketch2Scene: Sketch-based Co-retrieval and Co-placement of 3D Models. *ACM Transactions on Graphics,* 2013, vol. 32 (4), 123-1, 123-12